# FASCICULE DE BREVET EUROPEEN

(11) **EP 4 144 600 B1**
(45) Date de publication et mention de la délivrance du brevet: **20.11.2024**
(21) Numéro de dépôt: 22191790.9
(22) Date de dépôt: 23.08.2022
(51) Int. Cl.: B60S 1/40, B60S 1/04, B60S 1/38

(54) **ADAPTATEUR D'UN SYSTÈME D ESSUYAGE**
ADAPTER FÜR REINIGUNGSSYSTEM
ADAPTER FOR A WIPING SYSTEM

(30) Priorité: 01.09.2021 FR 2109139
(43) Date de publication de la demande: 08.03.2023
(73) Titulaire: Valeo Systèmes d'Essuyage, 78322 Le Mesnil Saint Denis (FR)
(72) Inventeur: GAUCHER, Vincent, 78321 LE MESNIL SAINT DENIS (FR); HOUSSAT, Stephane, 78321 LE MESNIL SAINT DENIS (FR); POTON, Eric, 78321 LE MESNIL SAINT DENIS (FR); JOMARD, Olivier, 78321 LE MESNIL SAINT DENIS (FR)
(74) Mandataire: Valeo Visibility

(56) Documents cités:
- WO-A1-2016/119852
- DE-A1- 102019 211 328
- DE-U1- 202018 006 136
- DE-U1- 202018 006 137
- DE-U1- 202018 006 138

## Description

Le domaine de la présente invention est celui des systèmes d'essuyage destinés aux véhicules automobiles. Plus particulièrement, le domaine de la présente invention est celui des adaptateurs disposés entre un bras d'essuie-glace et un balai d'essuyage de tels systèmes d'essuyage.

Les véhicules automobiles sont couramment équipés de systèmes d'essuyage destinés à nettoyer leurs surfaces vitrées, et notamment leur pare-brise. De tels systèmes d'essuyage comprennent au moins un bras d'essuie-glace et un balai d'essuyage entrainé par le bras d'essuie-glace. Le bras d'essuie-glace est relié à un moteur électrique du véhicule et le balai d'essuyage comprend au moins une lame d'essuyage adaptée pour venir au contact de la surface vitrée à essuyer. Afin de pouvoir entrainer le balai d'essuyage, un adaptateur est agencé entre ce balai d'essuyage et le bras d'essuie-glace. Plus particulièrement, l'adaptateur est agencé entre le bras d'essuie-glace et un connecteur relié au balai d'essuyage. L'adaptateur est alors solidaire du bras d'essuie-glace et plus particulièrement d'une extrémité libre du bras d'essuie-glace, une telle coopération étant amovible de telle sorte qu'elle permet de changer le balai d'essuyage lorsque celui-ci est usé.

Afin de rendre optimal le nettoyage des surfaces vitrées des véhicules, au moyen des systèmes d'essuyage, il est nécessaire que lesdits systèmes d'essuyage et notamment leurs balais d'essuyage soient plaqués contre la surface vitrée à nettoyer. Aussi, des moyens participant au plaquage des balais d'essuyage sont connus, tel que des déflecteurs disposés sur les balais d'essuyage et assurant, lors du roulage du véhicule, le plaquage des balais d'essuyage sous l'effet d'un flux d'air. Cependant, le plaquage des balais d'essuyage, bien qu'il soit efficace, n'est pas optimal et peut dès lors être amélioré.

La présente invention propose une alternative aux solutions existantes en positionnant les différents éléments de fixation les uns par rapport aux autres de sorte à optimiser le plaquage du balai d'essuyage contre la surface vitrée du véhicule.

Un exemple d'alternative est décrite dans le document WO2016119852A1.

Dans ce contexte, la présente invention a pour principal objet un adaptateur pour la fixation d'un balai d'essuyage à un bras d'un système d'essuyage, l'adaptateur s'étendant le long d'une direction longitudinale, l'adaptateur étant configuré pour être monté rotatif sur un connecteur d'un balai d'essuyage autour d'un axe de rotation transversal à la direction longitudinale, l'adaptateur comprenant au moins une paroi latérale et une paroi supérieure présentant au moins un bord commun entre elles, la paroi latérale et la paroi supérieure participant à définir un volume interne de l'adaptateur, l'adaptateur comprenant une première paroi interne et une deuxième paroi interne s'étendant au moins en partie dans le volume interne de l'adaptateur et participant à délimiter au moins en partie une zone de réception destinée à recevoir le connecteur, l'adaptateur comprenant au moins un logement de réception destiné à recevoir le bras du système d'essuyage et qui présente une section rectangulaire définie par deux grands côtés et deux petits côtés, une droite passant par l'un des grands côtés coupe la zone de réception destinée à recevoir le connecteur, l'adaptateur étant caractérisé en ce qu'il comprend au moins un renfort (52) s'étendant entre la première paroi interne (20) et la paroi latérale (10) et/ou la paroi supérieure (12), le logement de réception (32) étant défini par une première portion comprenant un manchon (64), par une deuxième portion ouverte sur le volume interne et par une troisième portion comprenant F une ouverture (54) ménagée dans le renfort (52).

Le balai d'essuyage et le bras font partie d'un système d'essuyage d'un véhicule destiné à nettoyer au moins en partie une surface vitrée dudit véhicule. Le système d'essuyage comprend alors le bras entrainé en rotation par un moteur électrique du véhicule et assurant le mouvement de rotation du balai d'essuyage, auquel il est solidaire via l'adaptateur et le connecteur, contre la surface vitrée afin que la lame portée par le balai d'essuyage débarrasse ladite surface vitrée des gouttes de pluie et/ou de débris solides, déposés sur cette dernière. Le logement de réception s'étend dans le volume interne de l'adaptateur de sorte que la droite passant par l'un des grands côtés du logement de réception s'étende également dans la zone de réception. On comprend que la droite s'étend au moins dans une partie de la zone de réception sans pour autant traverser ladite zone de réception le long d'une dimension principale.

Par ailleurs, la droite est inclinée par rapport à un plan d'allongement principal de la première paroi interne, de la deuxième paroi interne et/ou de la paroi latérale par exemple. En d'autres termes, la droite est au moins sécante par rapport au plan d'allongement principal de la première paroi interne, de la deuxième paroi interne et/ou de la paroi latérale.

Cette disposition astucieuse du logement de réception par rapport à la zone de réception permet de réduire l'encombrement des composants de l'adaptateur au sein de même du volume interne de l'adaptateur, le logement de réception étant disposé plus proche de l'adaptateur comparativement à ce qui est connu. De plus, cela optimise l'appui sur une surface vitrée du balai d'essuyage tout en stabilisant la position du balai d'essuyage par au bras et diminuant les perturbations aérauliques.

La zone de réception est quant à elle délimitée transversalement par la première paroi interne et par la deuxième paroi interne, longitudinalement par deux parois latérales et enfin verticalement par la paroi supérieure et par une bouche délimitée par un bord libre des parois internes et des parois latérales. On comprend ici que la droite passe ainsi par la zone de réception définie par l'ensemble des composants délimitant la zone de réception.

Selon une caractéristique optionnelle de l'invention, la droite passant par l'un des grands côtés est sécante à l'axe de rotation de l'adaptateur au sein de la zone de réception.

Selon une caractéristique optionnelle de l'invention, l'adaptateur est configuré pour être monté en rotation sur un connecteur au moyen d'un dispositif de rotation, la droite passant par l'un des grands côtés coupe un des éléments du dispositif de rotation.

Selon une caractéristique optionnelle de l'invention, la paroi latérale et la paroi supérieure présentent chacune un bord libre et un bord commun à la paroi latérale et la paroi supérieure, l'adaptateur présentant une section triangulaire vue dans un plan de coupe perpendiculaire à la direction longitudinale et définie par le bord libre de la paroi latérale, le bord libre de la paroi supérieure et par le bord commun entre la paroi latérale et la paroi supérieure, la paroi supérieure étant courbée entre le bord commun et son bord libre vue dans le plan de coupe perpendiculaire à la direction longitudinale.

De plus, le bord libre de la paroi supérieure correspond au bord disposé en travers du flux d'air lorsque le système d'essuyage est disposé sur le véhicule, le flux d'air léchant la paroi supérieure. En d'autres termes, le bord libre de la paroi supérieure est le bord le plus en avant du véhicule lorsque le système d'essuyage est monté sur ledit véhicule. On comprend ainsi que le bord libre de la paroi latérale et la paroi latérale en elle-même sont disposés à l'arrière du système d'essuyage, entre la surface vitrée et le bord libre de la paroi supérieure suivant une trajectoire du flux d'air, lorsque le système d'essuyage est monté sur le véhicule.

Selon une autre caractéristique optionnelle de l'invention, l'adaptateur comprend au moins un renfort s'étendant entre la première paroi interne et la paroi latérale et/ou la paroi supérieure, le logement de réception étant défini par une première portion comprenant un manchon, par une deuxième portion ouverte sur le volume interne et par une troisième portion comprenant une ouverture ménagée dans le renfort.

Le manchon comprend une paroi participant à délimiter au moins en partie la première portion du logement de réception, ladite paroi s'étendant longitudinalement en prenant la forme d'un cylindre évidé.

L'ouverture ménagée dans le renfort prend globalement une forme similaire à une section du manchon vue dans un plan perpendiculaire à la direction longitudinale. Par ailleurs, l'ouverture ménagée dans le renfort et le manchon sont alignés le long d'une direction parallèle à la direction longitudinale.

Selon une autre caractéristique optionnelle de l'invention, le renfort s'étend perpendiculairement par rapport à la première paroi interne et/ou à la paroi latérale.

Selon une autre caractéristique optionnelle de l'invention, l'adaptateur comprend une première série de renforts qui s'étendent entre la paroi supérieure, la paroi latérale et la première paroi interne, et une deuxième série de renforts qui s'étendent entre la paroi supérieure et la deuxième paroi interne participant à définir la zone de réception, ladite zone de réception s'étendant entre la première série de renforts et la deuxième série de renforts.

La zone de réception est par exemple délimitée par la première paroi interne et par la deuxième paroi interne s'étendant distinctement et parallèlement à la première paroi interne.

Selon une autre caractéristique optionnelle de l'invention, le logement de réception est décalé latéralement par rapport à la zone de réception. Ce décalage latéral optimise la compacité de l'adaptateur mentionnée ci-dessus.

Selon une autre caractéristique optionnelle de l'invention, une position du logement de réception est décalée par rapport à une position de la zone de réception selon une direction transversale, cette dernière étant perpendiculaire à la direction longitudinale.

Selon une autre caractéristique optionnelle de l'invention, le logement de réception est disposé dans le volume interne entre la zone de réception et la paroi latérale.

Selon une autre caractéristique optionnelle de l'invention, la droite passant par l'un des grands côtés est sécante à l'axe de rotation de l'adaptateur selon un angle compris entre 20 et 60°, préférentiellement compris entre 30 et 50° et encore plus préférentiellement compris entre 35 et 45°.

Selon une autre caractéristique optionnelle de l'invention, l'adaptateur comprend un dispositif de verrouillage destiné à solidariser longitudinalement l'adaptateur par rapport au bras du système d'essuyage, le dispositif de verrouillage comprenant au moins un organe de poussée et un organe de blocage, l'organe de poussée s'inscrivant dans un profil de la paroi supérieure tandis que l'organe de blocage s'étend au moins en partie dans le logement de réception destiné à recevoir le bras.

L'invention concerne aussi un dispositif de connexion pour un balai d'essuyage comprenant au moins un connecteur et un adaptateur selon l'une quelconque des caractéristiques précédentes, le connecteur étant monté en rotation autour de l'axe de rotation de l'adaptateur au moyen d'un dispositif de rotation.

L'invention a également pour objet un balai d'essuyage comprenant au moins un dispositif de connexion selon l'une quelconque des caractéristiques précédentes ou un adaptateur selon l'une quelconque des caractéristiques précédentes.

L'invention concerne enfin un système d'essuyage comprenant au moins un bras et un balai d'essuyage selon l'une quelconque des revendications précédentes, le bras comprenant au moins une tige se logeant dans le logement de réception de l'adaptateur. On comprend ici par « tige » un élément plein et allongé présentant par exemple une section rectangulaire vue dans un plan perpendiculaire à une direction d'allongement principal de la tige.

Selon une autre caractéristique optionnelle de l'invention, au moins une extrémité de la tige prend une forme complémentaire au logement de réception de l'adaptateur, la tige présentant une encoche coopérant avec un dispositif de verrouillage pour bloquer longitudinalement la position de l'adaptateur sur la tige.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[[Fig. 1] est une vue en perspective d'un système d'essuyage comprenant au moins un bras, un balai d'essuyage et un adaptateur selon l'invention ;
[Fig. 2] est une vue en perspective de dessus de l'adaptateur représenté sur la figure 1 ;
[Fig. 3] est une vue en perspective de dessous de l'adaptateur représenté sur la figure 1 ;
[Fig. 4] est une coupe transversale de l'adaptateur représenté sur la figure 1 ;
[Fig. 5] est une vue en perspective de dessous de l'adaptateur et du bras représentés sur la figure 1.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « longitudinale », « transversale » et « verticale » se réfèrent à l'orientation d'un système d'essuyage selon l'invention. Une direction longitudinale correspond à une direction principale d'allongement d'un adaptateur selon l'invention, cette direction longitudinale étant parallèle à un axe longitudinal L d'un repère L, V, T illustré sur les figures. Une direction transversale correspond à une direction le long de laquelle un renfort s'étend principalement, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et l'axe transversal T.

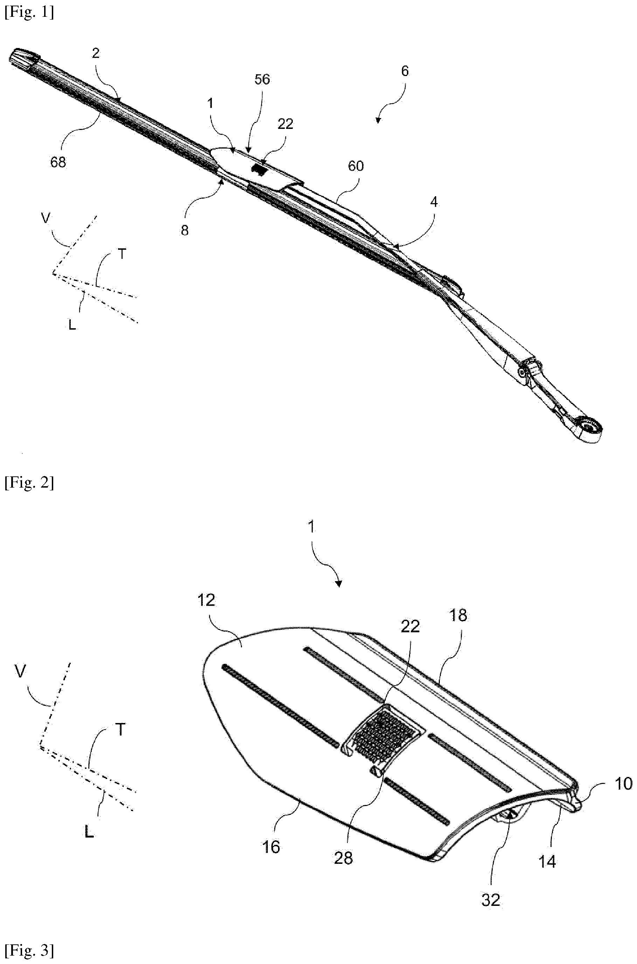

La figure 1 illustre un système d'essuyage 6 configuré pour assurer le nettoyage d'une surface vitrée d'un véhicule, par exemple un parebrise, de manière à améliorer la visibilité qu'a un conducteur de la route située devant le véhicule, par exemple par temps de pluie ou encore pour débarrasser ladite surface vitrée de débris solides accrochés à cette dernière. Le système d'essuyage 6 s'étend principalement le long de la direction longitudinale L, et comprend au moins un bras 4 d'essuyage portant à une extrémité un balai d'essuyage 2 et étant reliée à une autre extrémité opposée selon la direction longitudinale L au véhicule.

Le bras 4 et le balai d'essuyage 2 s'étendent tous deux principalement suivant la direction longitudinale L du système d'essuyage 6. Le bras 4 comprend plus précisément un corps de liaison destiné à rendre solidaire le bras 4 du véhicule et une tige 60 s'étendant depuis le corps de liaison jusqu'à une extrémité du bras 4. On comprend par « tige » un élément plein et s'allongeant le long de la direction longitudinale L. La tige 60 présente ici une section rectangulaire, vue dans un plan perpendiculaire à la direction longitudinale L. Cependant, une tige 60 présentant une section discoïde, triangulaire ou autre ne sortirait pas pour autant du cadre de l'invention.

De plus, le balai d'essuyage 2 est notamment adapté pour être entrainé en rotation par le bras 4 contre la surface vitrée du véhicule, le bras 4 étant lui-même entrainé en rotation par un moteur, non visible, par exemple un moteur électrique porté par le véhicule.

Afin de relier le balai d'essuyage 2 à l'extrémité du bras 4, ledit balai d'essuyage 2 comprend un dispositif de connexion 56 comportant au moins un connecteur 8 qui porte une lame d'essuyage 68 du balai d'essuyage 2 et un adaptateur 1 monté en rotation sur le connecteur 8, l'adaptateur 1 étant apte à coopérer avec l'extrémité du bras 4. On comprend notamment que la lame du balai d'essuyage 2 est destinée à être au contact de la surface vitrée du véhicule. Par ailleurs, le connecteur 8 est configuré pour porter la lame, directement ou indirectement.

La rotation de l'adaptateur 1 et du connecteur 8 se fait au moyen d'un dispositif de rotation, cette rotation se faisant autour d'un axe de rotation R sensiblement parallèle à la direction transversale T. Une description plus détaillée du dispositif de rotation sera faite dans la suite de la description.

Tel que plus particulièrement visible sur les figures 2 et 3, l'adaptateur 1 s'étend principalement le long de la direction longitudinale L. L'adaptateur 1 comprenant au moins une paroi latérale 10 et une paroi supérieure 12, la paroi latérale 10 et la paroi supérieure 12 présentant chacune un bord libre 14, 16 et un bord commun 18 à la paroi latérale 10 et à la paroi supérieure 12.

La paroi latérale 10 s'étend principalement dans un plan parallèle aux directions longitudinale L et verticale V. La paroi latérale 10 présente ici un bord libre 14 et un bord commun 18 avec la paroi supérieure 12, le bord commun 18 joignant la paroi latérale 10 et la paroi supérieure 12 s'étendant chacune dans des plans distincts.

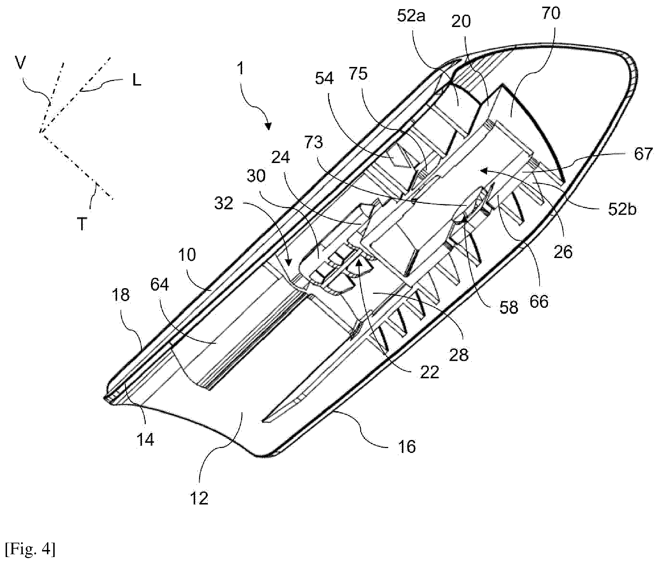

La paroi supérieure 12 présente également un bord libre 16, et s'étend entre son bord libre 16 et le bord commun 18 en présentant une courbe, tel que particulièrement visible sur la figure 4. On comprend ici que la paroi supérieure 12 présente un profil courbé entre le bord commun 18 et son bord libre 16 vue dans le plan perpendiculaire à la direction longitudinale L en s'inscrivant dans un cercle.

Dans cette configuration, l'adaptateur 1 présente une section triangulaire vue dans un plan perpendiculaire à la direction longitudinale L, le triangle de cette section étant définie par le bord libre 14 de la paroi latérale 10, le bord libre 16 de la paroi supérieure 12 et par le bord commun 18 entre la paroi latérale 10 et la paroi supérieure 12. On peut ainsi définir un volume interne de l'adaptateur 1, ce volume interne étant au moins en partie délimité par la paroi latérale 10 et la paroi supérieure 12. Le volume interne s'étend principalement sous la forme d'un prisme droit de base triangulaire.

De plus, tel que plus particulièrement visible sur les figures 3 à 5, l'adaptateur 1 comprend une première paroi interne 20 s'étendant au moins en partie dans le volume interne de l'adaptateur 1. Plus précisément, la première paroi interne 20 s'étend dans un plan sensiblement parallèle aux directions longitudinale L et verticale V, depuis la paroi supérieure 12 dans le volume interne. On comprend que la première paroi interne 20 s'étend sensiblement parallèlement à la paroi latérale 10.

Selon l'invention, la première paroi interne 20 participe à délimiter au moins en partie une zone de réception 26 destinée à recevoir le connecteur 8. Le connecteur 8, lorsque l'adaptateur 1 est monté sur le connecteur 8, se loge au moins en partie dans la zone de réception 26.

Par ailleurs, et tel que plus particulièrement visible sur les figures 3 à 5, l'adaptateur 1 comprend plusieurs parois participant à délimiter la zone de réception 26, dont notamment la première paroi interne 20. Plus particulièrement, ces parois s'étendent en formant un rectangle, les parois s'étendant dans un plan sensiblement perpendiculaire aux plans dans lequel s'étendent les parois voisines. On comprend donc que l'adaptateur 1 comprend une deuxième paroi interne 66 s'étendant parallèlement à la première paroi interne 20, et deux parois latérales 70 s'étendant perpendiculairement aux parois longitudinale 66 et interne 20 et entre ces dernières.

On peut également définir que la zone de réception 26 est délimitée transversalement entre les première et deuxième parois internes 20, 66, longitudinalement entre les parois latérales 70 et verticalement par la paroi supérieure 12 et par une bouche 67 définie par les bords libres des parois internes 20, 66 et latérales 70.

De plus, le connecteur 8, une fois monté sur l'adaptateur 1, est disposé au moins en partie dans la zone de réception 26 de l'adaptateur 1. Autrement dit, le connecteur 8 est disposé au moins en partie entre la première paroi interne 20 et la deuxième paroi interne 66, et entre les parois latérales 70.

Comme mentionné auparavant, l'adaptateur 1 est monté en rotation sur le connecteur 8 au moyen d'un dispositif de rotation 58. Ce dernier comprend plusieurs éléments coopérant les uns avec les autres et disposés d'une part sur le connecteur 8 et d'autre part sur l'adaptateur 1.

Par exemple, et comme visible sur les figures 3 et 4, l'adaptateur 1 comprend d'une part un élément mâle 73 sur la deuxième paroi interne 66 configuré pour coopérer avec un élément femelle du connecteur 8, et d'autre part un élément femelle 75 destiné à coopérer avec un élément mâle du connecteur 8.

Plus précisément, les éléments mâles prennent la forme d'une languette portant un toron, et les éléments femelles prennent la forme d'un orifice dans lequel le toron est destiné à être entraîné en rotation autour de l'axe de rotation R. La languette de l'adaptateur 1 s'étend, par exemple, dans un plan confondu avec le plan dans lequel s'étend la deuxième paroi interne 66, et est délimitée de ladite deuxième paroi interne 66 par deux rainures s'étendant le long de la direction verticale V. Dans cette configuration, la languette est élastiquement déformable en étant mobile autour d'une direction de rotation parallèle à la direction longitudinale L de sorte à permettre le montage de l'adaptateur 1 sur le connecteur 8.

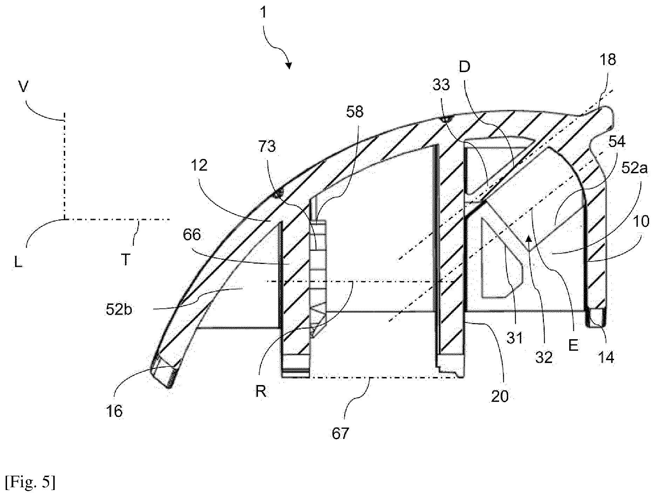

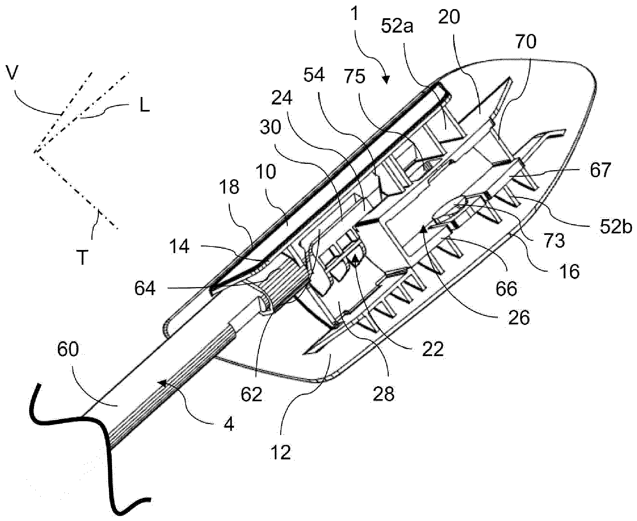

Par ailleurs, l'adaptateur 1 comprend au moins un renfort 52 s'étendant entre la première paroi interne 20 et la paroi latérale 10 et/ou la paroi supérieure 12. Avantageusement et tel qu'illustré sur les figures 3 et 5, l'adaptateur 1 comprend une première série de renforts 52a qui s'étendent entre la paroi supérieure 12, la paroi latérale 10 et la première paroi interne 20, et une deuxième série de renforts 52b qui s'étendent entre la paroi supérieure 12 et la deuxième paroi interne 66 participant à définir la zone de réception 26, ladite zone de réception 26 s'étendant entre la première série de renforts 52a et la deuxième série de renforts 52b.

Les renforts 52 de la première série de renforts 52a sont disposés entre la zone de réception 26, la paroi supérieure 12 et la paroi latérale 10 en s'alignant les uns à la suite des autres le long d'une direction parallèle à la direction longitudinale L. Par ailleurs, les renforts 52 de la première série de renforts 52a s'étendent avantageusement chacun dans un plan parallèle aux plans dans lesquels s'étendent les renforts 52 de ladite première série de renforts 52a.

Les renforts 52 de la deuxième série de renforts 52b sont disposés entre la zone de réception 26 et la paroi supérieure 12 en s'alignant les uns à la suite des autres le long d'une direction parallèle à la direction longitudinale L. Par ailleurs, les renforts 52 de la deuxième série de renforts 52b s'étendent avantageusement chacun dans un plan parallèle aux plans dans lesquels s'étendent les renforts 52 de ladite deuxième série de renforts 52b.

Préférentiellement, les renforts 52 de la première série de renforts 52a et de la deuxième série de renforts 52b s'étendent avantageusement chacun dans un plan parallèle aux plans dans lesquels s'étendent les renforts 52 de ladite première série de renforts 52a et de la ladite deuxième série de renforts 52b.

Par ailleurs, les renforts 52 de la première série de renforts 52a et de la deuxième série de renforts 52b s'étendent perpendiculairement par rapport à la première paroi interne 20 et/ou à la paroi latérale 10.

Par ailleurs, l'adaptateur 1 comprend un logement de réception 32 destiné à recevoir la tige 60 du bras 4.

Tel qu'illustré sur les figures 3 et 5, le logement de réception 32 est ici défini par une première portion par un manchon 64, par une deuxième portion ouverte sur le volume interne et par une troisième portion par une ouverture 54 ménagée dans un renfort 52 de la première série de renforts 52a. Lors de l'assemblement, l'adaptateur 1 est monté sur le bras 4 de sorte qu'une extrémité libre de la tige 60 traverse d'abord la première portion, puis la deuxième portion et enfin la troisième portion. On comprend ici que l'ouverture 54 est destinée à recevoir au moins une partie de la tige 60 du bras 4 et notamment une extrémité libre de la tige 60 du bras 4.

Le manchon 64 comprend une paroi participant à délimiter au moins en partie la première portion du logement de réception 32, ladite paroi s'étendant longitudinalement en prenant la forme d'un cylindre évidé.

L'ouverture 54 ménagée dans le renfort 52 prend globalement une forme similaire à une section du manchon 64 vue dans un plan perpendiculaire à la direction longitudinale. Par ailleurs, l'ouverture 54 ménagée dans le renfort 52 et le manchon 64 sont alignés le long d'une direction parallèle à la direction longitudinale L.

Dans cette disposition, et tel qu'illustré plus particulièrement sur la figure 5, l'ouverture 54 du renfort 52 et le manchon 64 s'alignent le long d'une direction parallèle à la direction longitudinale L, la tige 60 du bras 4 s'étendant dès lors le long de la direction longitudinale L à travers le manchon 64 et l'ouverture 54 du renfort 52.

Par ailleurs, le renfort 52 dans lequel est ménagée l'ouverture 54 destinée à recevoir l'extrémité libre de la tige 60 est le renfort 52 proximal de la première série de renforts 52a par rapport au manchon 64.

Avantageusement, au moins deux renforts 52 proximaux de la première série de renforts 52a par rapport au manchon 64 comprennent chacun une ouverture 54 participant à délimiter au moins en partie le logement de réception 32.

Selon l'invention et tel qu'illustré sur la figure 4, le logement de réception 32 prend globalement une forme rectangulaire vue dans une section s'inscrivant dans un plan perpendiculaire à la direction longitudinale L, en présentant deux grands côtés 33 de plus grandes dimensions que deux autres petits côtés 31, une droite D du logement de réception 32 s'étendant le long d'un des deux grands côtés 33 de la forme rectangulaire du logement de réception 32 coupant la zone de réception 26.

Le logement de réception 32 s'étend dans un plan d'extension principale E parallèle à la direction longitudinale L et à la droite D, le plan d'extension principale E étant vu dans une position passant par le centre des petits côtés 31 dudit logement de réception 32, le plan d'extension principale E du logement de réception 32 s'étendant à travers la zone de réception 26.

En d'autres termes, le logement de réception 32 s'étend dans le volume interne de l'adaptateur 1 de sorte que la droite D s'étend le long d'un des deux grands côtés 33 en passant par la zone de réception 26, tandis que le plan d'extension principale E passant par le centre des petits côtés 31 du logement de réception 32, s'étend à la fois dans le logement de réception 32 et dans la zone de réception 26. On comprend que la droite D et le plan d'extension principal E s'étendent au moins dans une partie de la zone de réception 26 sans pour autant traverser la zone de réception 26 le long d'une dimension principale de ladite zone de réception 26, la droite D coupant par exemple la bouche 67 et/ou l'une ou l'autre des parois internes 20, 66.

On peut également définir que la droite D est inclinée par rapport à un plan d'allongement principal de la première paroi interne 20 et/ou de la paroi latérale 10 par exemple. En d'autres termes, la droite D est au moins sécante par rapport au plan d'allongement principal de la première paroi interne 20 et/ou de la paroi latérale 10.

Par exemple, la droite D est sécante à l'axe de rotation R de l'adaptateur 1 au sein de la zone de réception 26. Dans un autre exemple, la droite D coupe l'un des éléments du dispositif de rotation 58 de l'adaptateur 1, tels que l'élément mâle 73 sur la deuxième paroi interne 66 de l'adaptateur ou l'élément femelle 75 destiné à coopérer avec un élément mâle du connecteur 8.

Tel qu'illustré aux figures3 à 5, le logement de réception 32 est décalé latéralement par rapport à la zone de réception 26. Autrement dit, la position du logement de réception 32 est décalée par rapport à la zone de réception 26 selon la direction transversale T. La position du logement de réception 32 est également décalée par rapport à la zone de réception 26 selon la direction verticale V.

Plus précisément, le logement de réception 32 est plus proche de la paroi latérale 10 que la zone de réception 26. En d'autres termes, le logement de réception 32 est disposé entre la zone de réception 26 et la paroi latérale 10. Encore plus précisément, le logement de réception 32, le bord commun 18 et la zone de réception 26 s'alignent le long d'une direction parallèle à la droite D, le logement de réception 32 étant disposé entre le bord commun 18 et la zone de réception 26.

Par ailleurs, le plan d'extension principale E du logement de réception 32 est sécant à un plan dans lequel s'inscrit l'axe de rotation R et la direction longitudinale selon un angle compris entre 20 et 60°, préférentiellement compris entre 30 et 50° et encore plus préférentiellement compris entre 35 et 45°. De plus, tel que représenté aux figures 3 et 5, l'adaptateur 1 comprend un dispositif de verrouillage 22 destiné à solidariser longitudinalement l'adaptateur 1 par rapport au bras 4 du système d'essuyage 6, le dispositif de verrouillage 22 comprenant au moins un organe de poussée 28 et un organe de blocage 30, l'organe de poussée 28 s'inscrivant dans un profil de la paroi supérieure 12 tandis que l'organe de blocage 30 s'étend au moins en partie dans le logement de réception 32 destiné à recevoir le bras 4. L'organe de poussée 28 s'étend dans un profil de la paroi supérieure 12, tandis que l'organe de poussée 28 est mobile depuis le logement de réception 32 vers la première paroi interne 20 de l'adaptateur 1.

Tel que représenté à la figure 5, au moins l'extrémité libre de la tige 60 prend une forme complémentaire au logement de réception 32 de l'adaptateur 1, la tige 60 présentant une encoche 62 coopérant avec le dispositif de verrouillage 22 pour bloquer longitudinalement la position de l'adaptateur 1 sur la tige 60. On comprend que l'extrémité libre est disposée dans l'encoche 62 de la tige 60 de sorte à bloquer longitudinalement la tige 60 dans le logement de réception 32.

On comprend que, pour déverrouiller la position de l'adaptateur 1 sur le bras 4, le dispositif de verrouillage 22 est entraîné en pivotement autour de la direction de pivotement jusqu'à ce que le moyen de limitation 24 bute contre la première paroi interne 20. Ce pivotement est suffisant pour débloquer la position de l'adaptateur 1 par au bras 4 tout en limitant le risque de casse du dispositif de verrouillage 22.

## Revendications

1. Adaptateur (1) pour la fixation d'un balai d'essuyage (2) à un bras (4) d'un système d'essuyage (6), l'adaptateur (1) s'étendant le long d'une direction longitudinale (L), l'adaptateur (1) étant configuré pour être monté rotatif sur un connecteur (8) d'un balai d'essuyage (2) autour d'un axe de rotation (R) transversal à la direction longitudinale (L), l'adaptateur (1) comprenant au moins une paroi latérale (10) et une paroi supérieure (12) présentant au moins un bord commun (18) entre elles, la paroi latérale (10) et la paroi supérieure (12) participant à définir un volume interne de l'adaptateur (1), l'adaptateur (1) comprenant une première paroi interne (20) et une deuxième paroi interne (66) s'étendant au moins en partie dans le volume interne de l'adaptateur (1) et participant à délimiter au moins en partie une zone de réception (26) destinée à recevoir le connecteur (8), l'adaptateur (1) comprenant au moins un logement de réception (32) destiné à recevoir le bras (4) du système d'essuyage (6) et présentant une section rectangulaire définie par deux grands côtés (33) et deux petits côtés (31), une droite (D) passant par l'un des grands côtés (33) coupant la zone de réception (26) destinée à recevoir le connecteur (8), l'adaptateur étant **caractérisé en ce qu'**il comprend au moins un renfort (52) s'étendant entre la première paroi interne (20) et la paroi latérale (10) et/ou la paroi supérieure (12), le logement de réception (32) étant défini par une première portion comprenant un manchon (64), par une deuxième portion ouverte sur le volume interne et par une troisième portion comprenant une ouverture (54) ménagée dans le renfort (52).

2. Adaptateur (1) selon la revendication précédente, dans lequel la paroi latérale (10) et la paroi supérieure (12) présentent chacune un bord libre (14, 16) et le bord commun (18) à la paroi latérale (10) et à la paroi supérieure (12), l'adaptateur (1) présentant une section triangulaire vue dans un plan de coupe perpendiculaire à la direction longitudinale (L) et définie par le bord libre (14) de la paroi latérale (10), le bord libre (16) de la paroi supérieure (12) et par le bord commun (18) entre la paroi latérale (10) et la paroi supérieure (12), la paroi supérieure (12) étant courbée entre le bord commun (18) et son bord libre (16) vue dans le plan de coupe perpendiculaire à la direction longitudinale (L).

3. Adaptateur (1) selon l'une quelconque des revendications précédentes, comprenant une première série de renforts (52a) qui s'étendent entre la paroi supérieure (12), la paroi latérale (10) et la première paroi interne (20), et une deuxième série de renforts (52b) qui s'étendent entre la paroi supérieure (12) et une deuxième paroi interne (66) participant à définir la zone de réception (26), ladite zone de réception (26) s'étendant entre la première série de renforts (52a) et la deuxième série de renforts (52b).

4. Adaptateur (1) selon l'une quelconque des revendications précédentes, dans lequel le logement de réception (32) est décalé latéralement par rapport à la zone de réception (26).

5. Adaptateur (1) selon l'une quelconque des revendications précédentes, dans lequel le logement de réception (32) est disposé dans le volume interne entre la zone de réception (26) et la paroi latérale (10).

6. Adaptateur (1) selon l'une quelconque des revendications précédentes, dans lequel la droite (D) passant par l'un des grands côtés (33) est sécante à l'axe de rotation (R) de l'adaptateur (1) au sein de la zone de réception (26).

7. Adaptateur (1) selon l'une quelconque des revendications précédentes, comprenant un dispositif de verrouillage (22) destiné à solidariser longitudinalement l'adaptateur (1) par rapport au bras (4) du système d'essuyage (6), le dispositif de verrouillage (22) comprenant au moins un organe de poussée (28) et un organe de blocage (30), l'organe de poussée (28) s'inscrivant dans un profil de la paroi supérieure (12) tandis que l'organe de blocage (30) s'étend au moins en partie dans le logement de réception (32) destiné à recevoir le bras (4).

8. Dispositif de connexion (56) pour un balai d'essuyage (2) comprenant au moins un connecteur (8) et un adaptateur (1) selon l'une quelconque des revendications précédentes, le connecteur (8) étant monté en rotation autour de l'axe de rotation (R) de l'adaptateur (1) au moyen d'un dispositif de rotation (58).

9. Balai d'essuyage (2) comprenant au moins un dispositif de connexion (56) selon la revendication précédente ou un adaptateur (1) selon l'une quelconque des revendications 1 à 7.

10. Système d'essuyage (6) comprenant au moins un bras (4) et un balai d'essuyage (2) selon la revendication précédente, le bras (4) comprenant au moins une tige (60) se logeant dans le logement de réception (32) de l'adaptateur (1).

11. Système d'essuyage (6) selon la revendication précédente, dans lequel au moins une extrémité de la tige (60) prend une forme complémentaire au logement de réception (32) de l'adaptateur (1), la tige (60) présentant une encoche (62) coopérant avec un dispositif de verrouillage (22) pour bloquer longitudinalement la position de l'adaptateur (1) sur la tige (60).

## Patentansprüche

1. Adapter (1) zur Befestigung eines Wischblattes (2) an einem Arm (4) eines Wischsystems (6), wobei sich der Adapter (1) entlang einer Längsrichtung (L) erstreckt, wobei der Adapter (1) dafür ausgelegt ist, an einem Verbinder (8) eines Wischblattes (2) drehbar um eine Drehachse (R), die quer zur Längsrichtung (L) verläuft, angebracht zu werden, wobei der Adapter (1) mindestens eine Seitenwand (10) und eine obere Wand (12) umfasst, die mindestens eine gemeinsamen Rand (18) zwischen sich aufweisen, wobei die Seitenwand (10) und die obere Wand (12) an der Definition eines Innenvolumens des Adapters (1) beteiligt sind, wobei der Adapter (1) eine erste Innenwand (20) und eine zweite Innenwand (66) umfasst, die sich wenigstens teilweise in dem Innenvolumen des Adapters (1) erstrecken und an der wenigstens teilweisen Begrenzung eines Aufnahmebereichs (26) beteiligt sind, der dazu bestimmt ist, den Verbinder (8) aufzunehmen, wobei der Adapter (1) mindestens einen Aufnahmesitz (32) umfasst, der dazu bestimmt ist, den Arm (4) des Wischsystems (6) aufzunehmen, und einen rechteckigen Querschnitt aufweist, der durch zwei große Seiten (33) und zwei kleine Seiten (31) definiert wird, wobei eine Gerade (D), die durch eine der großen Seiten (33) verläuft, den Aufnahmebereich (26) schneidet, der dazu bestimmt ist, den Verbinder (8) aufzunehmen, wobei der Adapter **dadurch gekennzeichnet ist, dass** er mindestens eine Verstärkung (52) umfasst, die sich zwischen der ersten Innenwand (20) und der Seitenwand (10) und/oder der oberen Wand (12) erstreckt, wobei der Aufnahmesitz (32) durch einen ersten Abschnitt, der eine Hülse (64) umfasst, durch einen zweiten Abschnitt, der am Innenvolumen offen ist, und durch einen dritten Abschnitt, der eine in der Verstärkung (52) ausgebildete Öffnung (54) umfasst, definiert ist.

2. Adapter (1) nach dem vorhergehenden Anspruch, wobei die Seitenwand (10) und die obere Wand (12) jeweils einen freien Rand (14, 16) und den Rand (18), welcher der Seitenwand (10) und der oberen Wand (12) gemeinsam ist, aufweisen, wobei der Adapter (1), in einer zur Längsrichtung (L) senkrechten Schnittebene gesehen, einen dreieckigen Querschnitt aufweist, der durch den freien Rand (14) der Seitenwand (10), den freien Rand (16) der oberen Wand (12) und durch den gemeinsamen Rand (18) zwischen der Seitenwand (10) und der oberen Wand (12) definiert ist, wobei die obere Wand (12), in der zur Längsrichtung (L) senkrechten Schnittebene gesehen, zwischen dem gemeinsamen Rand (18) und ihrem freien Rand (16) gekrümmt ist.

3. Adapter (1) nach einem der vorhergehenden Ansprüche, welcher eine erste Reihe von Verstärkungen (52a) umfasst, die sich zwischen der oberen Wand (12), der Seitenwand (10) und der ersten Innenwand (20) erstrecken, und eine zweite Reihe von Verstärkungen (52b), die sich zwischen der oberen Wand (12) und einer zweiten Innenwand (66), die an der Definition des Aufnahmebereichs (26) beteiligt ist, erstrecken, wobei sich der Aufnahmebereich (26) zwischen der ersten Reihe von Verstärkungen (52a) und der zweiten Reihe von Verstärkungen (52b) erstreckt.

4. Adapter (1) nach einem der vorhergehenden Ansprüche, wobei der Aufnahmesitz (32) bezüglich des Aufnahmebereichs (26) seitlich versetzt ist.

5. Adapter (1) nach einem der vorhergehenden Ansprüche, wobei der Aufnahmesitz (32) in dem Innenvolumen zwischen dem Aufnahmebereich (26) und der Seitenwand (10) angeordnet ist.

6. Adapter (1) nach einem der vorhergehenden Ansprüche, wobei die Gerade (D), die durch eine der großen Seiten (33) verläuft, die Drehachse (R) des Adapters (1) im Inneren des Aufnahmebereichs (26) schneidet.

7. Adapter (1) nach einem der vorhergehenden Ansprüche, welcher eine Verriegelungsvorrichtung (22) umfasst, die dazu bestimmt ist, den Adapter (1) bezüglich des Armes (4) des Wischsystems (6) in Längsrichtung fest zu verbinden, wobei die Verriegelungsvorrichtung (22) mindestens ein Schuborgan (28) und ein Blockierorgan (30) umfasst, wobei das Schuborgan (28) in einem Profil der oberen Wand (12) liegt, während das Blockierorgan (30) sich wenigstens teilweise in dem Aufnahmesitz (32) erstreckt, der dazu bestimmt ist, den Arm (4) aufzunehmen.

8. Verbindungsvorrichtung (56) für ein Wischblatt (2), welche mindestens einen Verbinder (8) und einen Adapter (1) nach einem der vorhergehenden Ansprüche umfasst, wobei der Verbinder (8) mittels einer Drehvorrichtung (58) um die Drehachse (R) des Adapters (1) drehbar angebracht ist.

9. Wischblatt (2), welches mindestens eine Verbindungsvorrichtung (56) nach dem vorhergehenden Anspruch oder einen Adapter (1) nach einem der Ansprüche 1 bis 7 umfasst.

10. Wischsystem (6), welches mindestens einen Arm (4) und ein Wischblatt (2) nach dem vorhergehenden Anspruch umfasst, wobei der Arm (4) mindestens eine Stange (60) umfasst, die in dem Aufnahmesitz (32) des Adapters (1) aufgenommen ist.

11. Wischsystem (6) nach dem vorhergehenden Anspruch, wobei mindestens ein Ende der Stange (60) eine zu dem Aufnahmesitz (32) des Adapters (1) komplementäre Form aufweist, wobei die Stange (60) einen Einschnitt (62) aufweist, der mit einer Verriegelungsvorrichtung (22) zusammenwirkt, um die Position des Adapters (1) auf der Stange (60) in Längsrichtung zu blockieren.

## Claims

1. Adapter (1) for fastening a wiper blade unit (2) to an arm (4) of a wiper system (6), the adapter (1) extending in a longitudinal direction (L), the adapter (1) being configured to be mounted rotatably on a connector (8) of a wiper blade unit (2) about an axis of rotation (R) transverse to the longitudinal direction (L), the adapter (1) comprising at least a side wall (10) and an upper wall (12) having at least one common edge (18) between them, the side wall (10) and the upper wall (12) helping to define an inner volume of the adapter (1), the adapter (1) comprising a first inner wall (20) and a second inner wall (66) extending at least partially into the inner volume of the adapter (1) and helping to delimit, at least partially, a receiving area (26) intended to receive the connector (8), the adapter (1) comprising at least one receiving housing (32) which is intended to receive the arm (4) of the wiper system (6) presenting a rectangular cross section defined by two major sides (33) and two minor sides (31), a straight line (D) passing through one of the major sides (33) cutting the receiving area (26) intended to receive the connector (8), the adapter being **characterized in that** it comprise at least one reinforcer (52) extending between the first inner wall (20) and the side wall (10) and/or the upper wall (12), the receiving housing (32) is defined by a first portion comprising a sleeve (64) by a second portion opening into the inner volume and by a third portion comprising an opening (54) formed in the reinforcer (52).

2. Adapter (1) according to the preceding claim, wherein the side wall (10) and the upper wall (12) each have a free edge (14, 16) and the edge (18) common to the side wall (10) and the upper wall (12), the adapter (1) having a cross section which is triangular when viewed in a section plane perpendicular to the longitudinal direction (L) and is defined by the free edge (14) of the side wall (10), the free edge (16) of the upper wall (12) and the common edge (18) between the side wall (10) and the upper wall (12), the upper wall (12) being curved between the common edge (18) and its free edge (16) when viewed in the section plane perpendicular to the longitudinal direction (L).

3. Adapter (1) according to any one of the preceding claims, comprising a first series of reinforcers (52a) that extend between the upper wall (12), the side wall (10) and the first inner wall (20), and a second set of reinforcers (52b) that extend between the upper wall (12) and the second inner wall (66), helping to define the receiving area (26), said receiving area (26) extending between the first series of reinforcers (52a) and the second series of reinforcers (52b).

4. Adapter (1) according to any of the preceding claims, wherein the receiving housing (32) is laterally offset with respect to the receiving area (26).

5. Adapter (1) according to any of the preceding claims, wherein the receiving housing (32) is positioned in the inner volume between the receiving area (26) and the side wall (10).

6. Adapter (1) according to any of the preceding claims, wherein the straight line (D) passing through one of the major sides (33) is secant to the axis of rotation (R) of the adapter (1) within the receiving area (26).

7. Adapter (1) according to any of the preceding claims, comprising a locking device (22) intended for fixing the adapter (1) longitudinally with respect to the arm (4) of the wiper system (6), the locking device (22) comprising at least one pushing member (28) and a locking member (30), the pushing member (28) being inscribed within a profile of the upper wall (12), while the locking member (30) extends at least partially into the receiving housing (32) intended to receive the arm (4).

8. Connection device (56) for a wiper blade unit (2), comprising at least a connector (8) and an adapter (1) according to any of the preceding claims, the connector (8) being mounted rotatably about the axis of rotation (R) of the adapter (1) by means of a rotation device (58).

9. Wiper blade unit (2) comprising at least a connection device (56) according to the preceding claim, or an adapter (1) according to any of Claims 1 to 7.

10. Wiper system (6) comprising at least an arm (4) and a wiper blade unit (2) according to the preceding claim, the arm (4) comprising at least one stalk (60) that is housed in the receiving housing (32) of the adapter (1).

11. Wiper system (6) according to the preceding claim, wherein at least a free end of the stalk (60) has a shape complementary to the receiving housing (32) of the adapter (1), the stalk (60) having a cut-out (62) interacting with the locking device (22) for longitudinally locking the position of the adapter (1) on the stalk (60).
